**Europäisches Patentamt**

**European Patent Office**

**Office européen des brevets**

(11) Veröffentlichungsnummer: **0 008 789**
A1

(12) **EUROPÄISCHE PATENTANMELDUNG**

(21) Anmeldenummer: **79103251.9**

(22) Anmeldetag: **03.09.79**

(51) Int. Cl.³: **F 16 D 65/08**

(30) Priorität: **09.09.78 DE 2839329**

(43) Veröffentlichungstag der Anmeldung:
**19.03.80 Patentblatt 80/6**

(84) Benannte Vertragsstaaten:
**AT BE CH DE FR GB IT LU NL SE**

(71) Anmelder: **SIGRO-Siewer und Griesemer GmbH Metall-
und Kunststoffwarenfabrik Kommanditgesellschaft
In der Trift
D-5960 Olpe(DE)**

(72) Erfinder: **Griesemer, Albert
Ahornweg 11 A
D-5960 Olpe/Biggesee(DE)**

(74) Vertreter: **Hemmerich, Friedrich Werner et al,
Patentanwälte F.W. Hemmerich Gerd Müller, Dipl.-Ing.
D. Grosse Felix Pollmeier Hammerstrasse 2
D-5900 Siegen 1(DE)**

(54) **Bremsbacke.**

(57) Eine Bremsbacke für Trommelbremsen an Kraftfahrzeugen besteht aus einem bogenförmigen Steg (1) und einem Mantel (4,5), der den Steg etwa halbzylinderschalenförmig überdeckt und zur Aufnahme eines Bremsbelages dient. Steg (1) und Mantel werden aus zwei Blechteilen (2,3) gleicher Grundfläche gebildet, die am Steg (1) aufeinander gelegt und miteinander verschweißt (10) werden, während deren äußere Ränder, jeweils nach außen abgebogen, zylinderschalenförmige Flansche (4,5) halber Manterlbreite darstellen, die gemeinsam den Mantel zur Aufnahme des Bremsbelages bilden.

Fig. 1

Fig. 3

Croydon Printing Company Ltd.

0008789

- 1 -

Bremsbacke

Die Erfindung betrifft eine aus zwei miteinander verschweißten Teilen bestehende Bremsbacke für Trommelbremsen, insbesondere von Kraftfahrzeugen, mit einem achsnormal abzustützenden bogenförmigen, beidendig mit Stützflächen ausgestatteten und Durchbrechungen zur Aufnahme
von Federenden aufweisenden Steg und einem mit diesem
verbundenen und ihn etwa halbzylinderschalenförmig überdeckenden Mantel zur Aufnahme eines Bremsbelages.

Derartige Bremsbacken werden verbreitet beispielsweise
in Trommelbremsen von Kraftfahrzeugen verwendet. Übliche
Bremsbacken weisen einen einstückigen Steg auf, der an
seiner äußeren bogenförmigen Stirnfläche mit dem Mantel
verschweißt ist. Diese Schweißung kann von beiden Seiten her durchgehend oder innerhalb kurzer aufeinanderfolgender Abschnitte bewirkt werden. Eine relativ einfache Fertigung ergibt sich, wenn der Mantel mit Schweißwarzen ausgestattet wird und mittels dieser Schweißwarzen
durch Einzel- oder Gruppenschweißung unter gleichzeitiger weiterer Biegung des Mantels mit der Stirnfläche
des Steges verschweißt wird. Als nachteilig erweist sich
jedoch hierbei, daß zweckmäßig zusätzlich an den stärker

- 2 -

belasteten Enden kurze Schweißraupen aufzubringen sind,
und beim Anbiegen des Mantels findet eine nur teilweise
plastische Verformung statt, so daß Mantel und Steg gegeneinander mechanisch vorgespannt sind. Unangenehm macht
sich weiterhin bemerkbar, daß der Schweißvorgang umfangreicherer und zu bewegender Werkzeuge bedarf, und daß
bei nicht sorgfältiger Ausführung aller Schweißungen
die Festigkeit der erstellten Verbindung unzulässig
eingeschränkt wird. Es ist daher eine relativ sorgfältige Überprüfung der erstellten Bremsbacken erforderlich.

Die Erfindung geht von der Aufgabe aus, eine Bremsbacke
zu schaffen, die sich leicht erstellen läßt, und deren
Mantel mit dem Steg problemlos hochbelastbar ist.

Gelöst wird diese Aufgabe, indem der Steg der Bremsbacke
aus zwei Blechteilen gleicher Grundfläche besteht, deren
Grundflächen aufeinanderliegen und miteinander verschweißt
sind, und an deren äußeren Rand sich jeweils nach außen
abgebogene, etwa zylindermantelabschnittförmige Flansche
halber Mantelbreite anschließen. Das Verschweißen der
Grundflächen der Stege läßt sich durch Punktschweißung
leicht und sicher bewirken, und als zweckmäßig hat es
sich erwiesen, hierbei eines der Blechteile mit Schweißwarzen auszustatten. Die Belastbarkeit und Formbeständigkeit der Bremsbacke läßt sich weiter steigern, indem der
Wurzelbereich der Flansche mit Sicken ausgestattet ist,
die eine radiale Komponente aufweisen und gegen die
Grundfläche geneigt verlaufen.

- 3 -

Im einzelnen sind die Merkmale der Erfindung anhand eines Ausführungsbeispieles in Verbindung mit dieses darstellenden Zeichnungen erläutert. Es zeigen hierbei

Fig. 1 eine Seitenansicht einer Bremsbacke,

Fig. 2 die Ansicht auf die Stirnfläche des Steges und dieInnenfläche des Mantels der Bremsbacke nach Fig. 1 und

Fig. 3 einen Schnitt entlang der Linie III-III der Fig. 1.

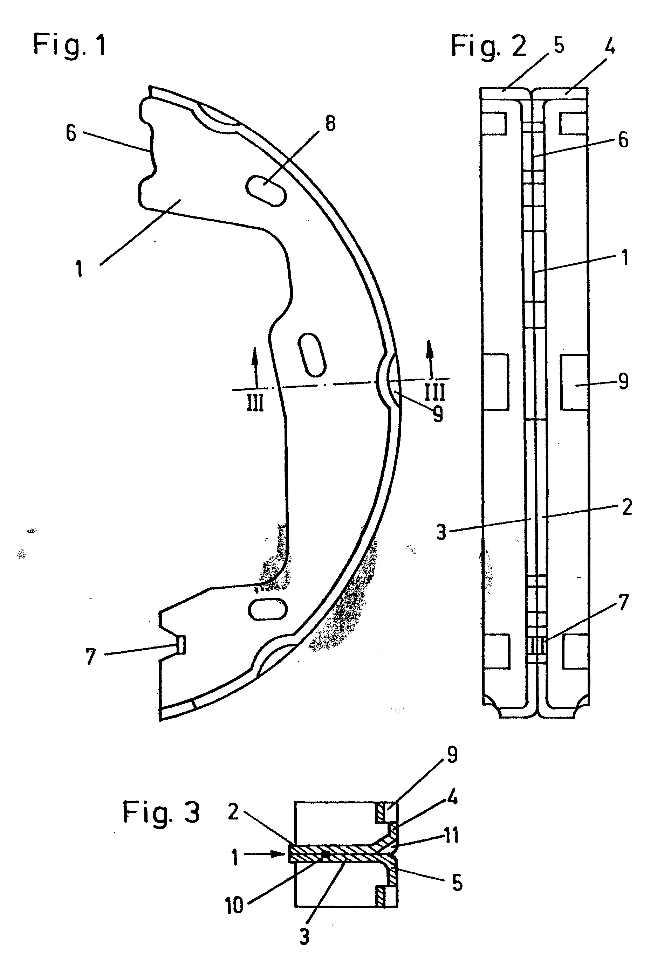

In Fig. 1 und 2 ist eine Bremsbacke gezeigt, deren Steg 1 aus zwei Blechteilen 2, 3 besteht, die mit ihren Grundflächen aufeinandergelegt und durch Punktschweißen miteinander verbunden sind. An den äußeren bogenförmigen Rand der Grundflächen der Blechteile 2, 3 schließen sich jeweils Flansche 4 und 5 an, die praktisch rechtwinklig jeweils nach außen so abgebogen sind, daß sie gemeinsam einen Mantel zur Aufnahme des Bremsbelages bilden.

Die im wesentlichen symmetrisch ausgebildeten Blechteile 2 und 3 weisen beidendig zurückgezogene Stützflächen 6 bzw. 7 auf, mittels deren sie sich in einer Trommelbremse abzustützen vermögen, und sie sind mit jeweils übereinanderliegenden Löchern 8 beispielsweise zum Einhängen von Bremsfedern ausgestattet. In Teilbereichen der Flansche 4 und 5 sind weiterhin bogenförmige Ausnehmungen 9 in Richtung des Steges ausgeklinkt, um einem aufzubringenden Bremsbelag besseren Halt zu geben.

- 4 -

Das Verschweißen der Grundflächen der Blechteile 2 und 3 gestaltet sich einfach, da diese Blechteile nur so aufeinandergelegt zu werden brauchen, daß ihre Grundflächen einander deckend übergreifen: Die Schweißelektroden selbst sind dann nur innerhalb einer planen Ebene aufzulegen, und die Herstellung der Schweißpunkte 11 wird dadurch vereinfacht, daß eines der Blechteile mit eingeprägten Schweißwarzen ausgestattet ist.

Die gemäß der Erfindung erstellte Bremsbacke erweist sich als außerordentlich belastungsfähig. Die Verschweißung der beiden Blechteile ist relativ unkritisch, und der durch die Flansche gebildete Mantel ist mit dem zweiteiligen Steg außerordentlich fest verbunden, da die Flansche ja einstückig aus den Stegen abgebogen sind. Die Widerstandsfähigkeit gegen Verformungen läßt sich weiterhin dadurch steigern, daß, wie anhand der Fig. 3 veranschaulicht ist, im Wurzelbereiche der Flansche Sicken 11 angeordnet werden, die in einer zu den Flanschen 3 radialer Ebene schräg sowohl hinsichtlich der Flansche als auch der Grundflächen der Blechteile verlaufen.

Gegebenenfalls können auch weitere Bereiche durch Anordnen von Sicken verstärkt werden.

Damit wird bei Befolgung der Lehren der Erfindung eine Bremsbacke geschaffen, die durch Wegfall von starken zu bearbeitenden Blechen an Werkzeugen und Pressen keine zu hohen Forderungen stellt; beispielsweise zur Schaffung einer Bremsbacke mit der üblichen Steg-

- 5 -

stärke von beispielsweise 4 mm und einer Mantelstärke von ca. 2 mm sind Blechteile mit einer Stärke von 2 mm zu bearbeiten. Die zum Verbinden der Blechteile erforderlichen Schweißungen sind unkritisch und
liegen innerhalb einer Ebene, so daß sie leicht erstellbar sind. Die einstückige Verbindung zwischen Stegbereichen und Flanschen ergibt sowohl eine hohe Belastbarkeit als auch eine unbedingte Sicherheit gegen Ablösen des Mantels, so daß bisher vorliegende
Probleme entfallen und sowohl die Durchführung der
Schweißung als auch deren Überprüfung erleichtert werden. Gegebenenfalls läßt sich die Sicherheit gegen Verformungen durch Anordnen von Sicken steigern, wobei
diese Maßnahmen nicht nur auf den Wurzelbereich der
Flansche beschränkt bleibt.

000878

- 1 -

Patentansprüche

1. Aus zwei miteinander verschweißten Teilen bestehende Bremsbacke für Trommelbremsen, insbesondere von Kraftfahrzeugen, mit einem achsnormal abzustützenden bogenförmigen, beidendig mit Stützflächen ausgestatteten und Durchbrüche zur Aufnahme von Federeneden aufweisenden Steg und einem mit diesem verbundenen und ihn etwa halbzylinderschalenförmig überdeckenden Mantel zur Aufnahme eines Bremsbelages, d a d u r c h   g e k e n n z e i c h n e t , daß der Steg (1) aus zwei Blechteilen /2,3) gleicher Grundfläche besteht, deren Grundflächen aufeinanderliegen und miteinander verschweißt sind, und an deren äußeren Rand sich jeweils nach außen abgebogene, zylindermantelabschnittförmige Flansche (4,5) halber Mantelbreite anschließen.

2. Bremsbacke nach Anspruch 1, d a d u r c h   g e k e n n z e i c h n e t, daß die Grundflächen der Blechteile (2,3) durch Punktschweißung miteinander verbunden sind.

3. Bremsbacke nach Anspruch 1 oder 2, d a d u r c h   g e   k e n n z e i c h n e t , daß die Grundfläche eines der Blechteile (3) eingeprägte Schweißwarzen (10) aufweist.

- 2 -

4. Bremsbacke nach Anspruch 1 bis 3,
   d a d u r c h   g e k e n n z e i c h n e t ,
   daß der Wurzelbereich der Flansche (4,5) mit Sicken
   (11) ausgestattet ist, die eine radiale Komponente
   aufweisen und gegen die Grundfläche geneigt verlaufen.

Fig. 1

Fig. 2

Fig. 3

0008789

0008789

Europäisches
Patentamt

EUROPÄISCHER RECHERCHENBERICHT

Nummer der Anmeldung

EP 79 103 251.9

| EINSCHLÄGIGE DOKUMENTE | | | KLASSIFIKATION DER ANMELDUNG (Int.Cl.³) |
|---|---|---|---|
| Kategorie | Kennzeichnung des Dokuments mit Angabe, soweit erforderlich, der maßgeblichen Teile | betrifft Anspruch | F 16 D 65/08 |
| X | US - A - 1 652 035 (McDONALD)<br>* Seite 2, Zeilen 31 bis 39; Fig. 1,4 *<br>-- | 1,2 | |
| X | FR - E - 50 969 (BENDIX)<br>* Seite 2, Zeilen 36 bis 50; Fig. 3 *<br>-- | 3 | |
| | DE - B - 1 286 351 (TEVES)<br>* Spalte 2, Zeilen 8 bis 12; Fig. 2, Pos. 6 *<br>-- | 4 | RECHERCHIERTE SACHGEBIETE (Int. Cl.³)<br>F 16 D 65/00 |
| A | DE - B - 1 133 263 (TEVES)<br>-- | | |
| A | US - A - 2 684 133 (CHESTER)<br>---- | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 07-11-1979 | LUDWIG |